**Europäisches Patentamt**

**European Patent Office**

**Office européen des brevets**

(11) Numéro de publication : **0 410 844 B1**

(12)

# FASCICULE DE BREVET EUROPEEN

(45) Date de publication du fascicule du brevet :
**24.03.93 Bulletin 93/12**

(51) Int. Cl.$^5$ : **G01B 15/00,** G01T 1/29

(21) Numéro de dépôt : **90402042.7**

(22) Date de dépôt : **16.07.90**

(54) Détecteur d'orientation de sources émettrices de rayonnement radioactif.

(30) Priorité : **18.07.89 FR 8909627**

(43) Date de publication de la demande :
**30.01.91 Bulletin 91/05**

(45) Mention de la délivrance du brevet :
**24.03.93 Bulletin 93/12**

(84) Etats contractants désignés :
**DE GB**

(56) Documents cités :
**FR-A- 2 357 914**
**GB-A- 1 142 924**
**PATENT ABSTRACTS OF JAPAN, vol. 4, no. 11**
**(E-168), 26 janvier 1980 ; & JP-A-54151884**

(73) Titulaire : **COMMISSARIAT A L'ENERGIE
ATOMIQUE
31/33, rue de la Fédération
F-75015 Paris (FR)**

(72) Inventeur : **Chuiton, René
7 Impasse Sans Souci
F-92140 Clamart (FR)**
Inventeur : **Chemtob, Maurice
16 rue de Courcy
F-94000 Creteil (FR)**
Inventeur : **Kissel, Philippe
7, rue de la Chaise
F-75007 Paris (FR)**

(74) Mandataire : **Mongrédien, André et al
c/o BREVATOME 25, rue de Ponthieu
F-75008 Paris (FR)**

**EP 0 410 844 B1**

Jouve, 18, rue Saint-Denis, 75001 PARIS

## Description

L'invention se rapporte à un détecteur d'orientation de sources émettrices d'un rayonnement radioactif.

Le brevet américain 3 436 539 décrit un détecteur de l'angle d'azimut de la source (l'angle que fait la direction de la source avec un plan vertical fixe) et comprend trois cristaux disposés dans un boîtier à intervalles angulaires de 120°. Les cristaux sont partiellement enchâssés dans un écran qui présente des propriétés d'absorption partielle du rayonnement en fonction de la distance que ce rayonnement traverse dans ce matériau. Pour certaines orientations de la source, un cristal est atteint directement par le rayonnement et les deux autres après que le rayonnement a traversé une certaine épaisseur d'écran. Pour d'autres orientations, les trois cristaux ne sont atteints qu'après que le rayonnement a traversé une partie de l'écran. Il est possible d'obtenir en fonction de l'azimut de la source des signaux originaires des cristaux de forme sinusoïdale et de phases décalées de 120°, mais au prix d'une forme très compliquée de l'écran.

L'invention a pour objet un détecteur composé lui aussi d'un écran absorbant partiellement le rayonnement et de capteurs disposés dans cet écran, mais le détecteur proposé ici est de conception beaucoup plus simple et peut fournir des mesures plus précises et plus complètes. Il n'est en outre, contrairement à d'autres détecteurs, pas nécessaire de l'orienter vers la source pour effectuer la mesure.

Ce détecteur d'orientation de sources émettrices de rayonnement radioactif ponctuel, c'est-à-dire dont le rayonnement peut être considéré comme ayant une direction unique quel que soit le point du détecteur atteint, comporte une sphère homogène d'un matériau absorbant le rayonnement en proportion variable suivant la longueur du trajet dans le matériau, six capteurs du rayonnement, ainsi qu'un système de mesure et de comparaison des rayonnements reçus par les capteurs.

Les capteurs sont situés par paires sur trois diamètres distincts de la sphère et réagissent aux rayonnements reçus suivant des caractéristiques indépendantes de la direction de la source avant d'être enchâssés dans la sphère, ce qui signifie que leur signal de sortie ne dépend que de l'énergie et de l'intensité du rayonnement reçu. Les capteurs sont avantageusement à la même distance du centre de la sphère et sur trois diamètres perpendiculaires entre eux.

On a envisagé d'utiliser des capteurs constitués d'au moins une pastille semi-conductrice et d'un circuit de mesure et de les enchâsser à l'intérieur de la sphère en établissant des perçages dans celle-ci qui sont ensuite remplis d'un matériau moulable de densité identique au matériau du volume. Dans le cas d'une sphère en aluminium, ce matériau peut être un mélange de colle et de poudre d'alumine.

On va maintenant décrire l'invention plus en détail à l'aide de la réalisation représentée sur les dessins annexés dont l'énumération suit :

- la figure 1 est une vue d'ensemble du détecteur ;
- la figure 2 représente la composition des capteurs ; et
- la figure 3 représente plus en détail un des éléments des capteurs sensibles au rayonnement.

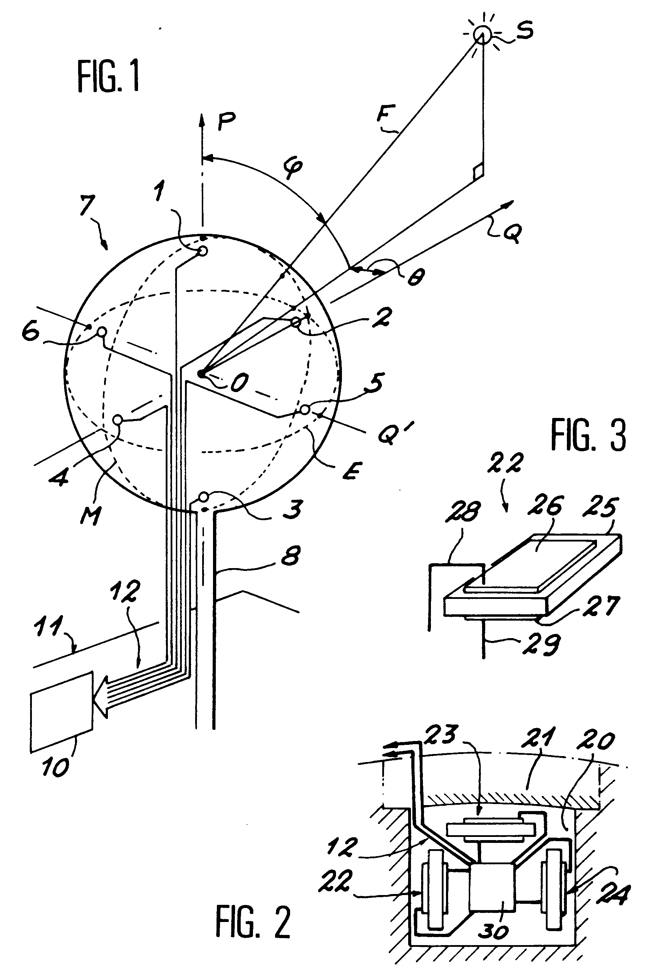

Le détecteur représenté sur la figure 1 comprend six capteurs 1 à 6 enchâssés dans une sphère 7 en aluminium et situés à une même distance de son centre O, non loin de sa périphérie ; les capteurs 1, 2 3 et 4 sont situés sur un plan méridien M de la sphère 7 et les capteurs 2, 4, 5 et 6 sur un plan équatorial E, perpendiculaire au précédent.

Les capteurs 1 et 3 sont alignés avec le centre O suivant une ligne polaire P, les capteurs 2 et 4 suivant une ligne Q et les capteurs 5 et 6 suivant une autre ligne Q′, toutes ces lignes étant perpendiculaires entre elles. La sphère 7 est brasée à un mât 8 établi dans le prolongement de la ligne polaire P et qui est fixé à un support tel qu'un véhicule robotisé 11 qui n'est représenté que partiellement. D'autres conceptions sont évidemment possibles, et le détecteur peut ainsi être monté fixe dans un local ou un support portatif. Son poids n'est en effet pas forcément très important : la sphère 7 peut avoir un diamètre de 10 cm, les capteurs 1 à 6 étant à une profondeur moyenne de 1 cm et ayant un encombrement d'environ 1 cm également dans toutes les directions. L'installation du détecteur sur un véhicule robotisé autorise cependant des recherches sans risque de sources radioactives, alors qu'un détecteur fixe peut être utile pour repérer par exemple l'emplacement d'avaries de conduites transportant des liquides radioactifs à l'intérieur d'une salle et servir ainsi de dispositif d'alarme.

Une source radioactive S émet un faisceau F vers le détecteur. On a représenté ici la partie du faisceau qui arrive au centre O de la sphère 7, et, pour établir les raisonnements qui vont suivre, on supposera désormais que les parties du faisceau qui arrivent aux autres points de la sphère sont parallèles entre elles. Cette condition peut être considérée comme réalisée si la source est de petites dimensions et située à une distance supérieure à cinq à dix fois le diamètre de la sphère 7.

On peut définir l'orientation de la source S par un angle d'azimut $\theta$ et un angle de site $\varphi$. L'azimut $\theta$ correspond à l'angle que fait le faisceau F avec le plan méridien M. Le site $\varphi$ est l'angle entre la ligne polaire P et le faisceau F.

Chacun des capteurs 1 à 6 est donc atteint par un rayonnement qui a été atténué par absorption dans la sphère 7 suivant une loi exponentielle résumée par la formule (1) :

(1) :

$$\dot{D}_i = \frac{\dot{D}_0}{(l+r)^2} e^{-\mu d_i}$$

ou $\dot{D}_0$ représente le débit de dose à 1 m de la source et dans l'air, $\dot{D}_i$ le débit de dose reçue par le capteur d'indice i, l la distance de la source S à la périphérie de la sphère 7, r le rayon de la sphère 7, $\mu$ le coefficient d'absorption du matériau de la sphère 7 et $d_i$ la longueur du trajet parcouru par le faisceau radioactif dans la sphère 7 avant d'arriver au capteur i.

La formule (2) :

(2) :

$$\dot{D}i = \frac{n_i}{k}$$

exprime que le taux de comptage des capteurs est proportionnel au débit de dose reçu à un coefficient constant près.

On peut vérifier que les distances parcourues par le rayonnement en fonction du rayon R de la sphère 7, de la distance d entre chacun des capteurs 1 à 6 et la périphérie de la sphère 7, de l'azimut $\theta$ et du site $\varphi$ s'expriment respectivement par les formules suivantes pour les capteurs 2, 4, 5 et 6 sur le plan équatorial E :

(3) :

$$d_2 = R \sqrt{1 - (1 - \frac{d}{R})^2 (1 - \cos^2\theta \sin^2\varphi)} - (R - d) \cos\theta \sin\varphi$$

(4) :

$$d_4 = R \sqrt{1 - (1 - \frac{d}{R})^2 (1 - \cos^2\theta \sin^2\varphi)} + (R - d) \cos\theta \sin\varphi$$

(5) :

$$d_5 = R \sqrt{1 - (1 - \frac{d}{R})^2 (1 - \sin^2\theta \sin^2\varphi)} + (R - d) \sin\theta \sin\varphi$$

(6) :

$$d_6 = R \sqrt{1 - (1 - \frac{d}{R})^2 (1 - \sin^2\theta \sin^2\varphi)} - (R - d) \sin\theta \sin\varphi$$

et celles des capteurs 1 et 3 sur la ligne polaire P par :

(7) :

$$d_1 = R \sqrt{1 - (1 - \frac{d}{R})^2 \sin^2\varphi} - (R - d) \cos\varphi$$

(8) :

$$d_3 = R \sqrt{1 - (1 - \frac{d}{R})^2 \sin^2\varphi} + (R - d) \cos\varphi$$

avec les angles tels que définis sur la figure 1.

Trois soustractions de ces distances faisant intervenir les capteurs sur un même diamètre :

(9) :

$$d_1 - d_3 = -2(R - d)\cos\varphi$$

(10) :

$$d_2 - d_4 = -2(R - d)\cos\theta \sin\varphi$$

(11) :

$$d_6 - d_5 = -2(R - d) \sin\theta \sin\varphi,$$

ou encore, après avoir appliqué les formules (1) et (2) :

(12) :

$$\mu = \frac{1}{2(R - d)\cos\varphi} \ln \frac{n_1}{n_3}$$

(13) :

$$\mu = \frac{1}{2(R - d)\cos\theta \sin\varphi} \ln \frac{n_2}{n_4}$$

(14) :

$$\mu = \frac{1}{2(R - d)\sin\theta \sin\varphi} \ln \frac{n_6}{n_5},$$

permettent d'obtenir les expressions des angles d'azimut $\theta$ et de site $\varphi$:

(15) :

$$\theta = \operatorname{Arc\ tg} \frac{\ln \frac{n_6}{n_5}}{\ln \frac{n_2}{n_4}}$$

(16) :

$$\varphi = \operatorname{Arc\ tg} \left( \frac{1}{\cos\theta} \cdot \frac{\ln \frac{n_2}{n_4}}{\ln \frac{n_1}{n_3}} \right)$$

Le coefficient d'absorption $\mu$ peut être recalculé par l'une des formules (12) à (14) pour en déduire l'énergie du rayonnement.

Les formules finales sont particulièrement simples grâce à la géométrie sphérique utilisée et aux symétries du détecteur. Les résultats sont ainsi plus précis. On pourrait toutefois accepter des capteurs situés sur des diamètres non perpendiculaires ou à des profondeurs différentes au prix de formules finales plus compliquées, car des coefficients aux numérateurs et dénominateurs des rapports ne seraient plus égaux et ne pourraient plus être éliminés. Remarquons également que ces formules sont valables quels que soient les angles $\theta$ et $\varphi$, et qu'il est donc inutile d'orienter le détecteur, ce qui est tout à fait intéressant quand il est monté sur un véhicule robotisé 11.

Le détecteur comprend, pour effectuer ces calculs, un ensemble électronique à microprocesseur 10 relié à chacun des capteurs 1 à 6 par une paire de fils électriques 12 dont seuls ceux qui aboutissent au capteur 4 ont été représentés, les autres étant implantés suivant un schéma semblable. Les fils électriques ont une direction radiale à proximité du capteur concerné, une partie collée à la surface de la sphère 7 et une partie menant à l'ensemble électronique à microprocesseur 10 fixée au mât 8.

On va maintenant décrire les capteurs permettant d'obtenir des réponses identiques quelle que soit l'orientation de la source S pour un rayonnement donné lorsque ces capteurs sont en dehors de la sphère 7.

On se reporte pour cela aux figures 2 et 3. Chacun des capteurs 1 à 6 est logé dans un passage 20 opéré radialement dans la sphère 7 et qu'un couvercle 21 ferme. Chacun des capteurs 1 à 6 comprend trois pastilles de détection 22, 23 et 24 identiques et constituées, comme le montre la figure 3, d'une tranche 25 de silicium en forme de carré recouverte sur ses deux faces de deux dépôts métalliques conducteurs 26 et 27 dont l'un est reliée par une patte métallique 28 à une tension de 12 volts et l'autre par une autre patte métallique 29 à la masse.

Chacun des capteurs 1 à 6 comprend en outre un ensemble électronique d'exploitation 30 non représenté en détail et constitué de composants de technologie CMOS qui présentent l'avantage d'être de très petite taille, ce qui contribue à réduire le volume des capteurs 1 à 6 et à minimiser les artefacts d'absorption qu'ils occasionnent. Les pattes 28 et 29 des pastilles 22 à 24 y aboutissent ainsi que les fils électriques 12 chargés de fournir les tensions et de transmettre les informations de comptage à l'ensemble à microprocesseur 10.

Deux des pastilles 22 et 24 sont parallèles et de part et d'autre de l'ensemble électronique de mesure 30, alors que la pastille 23 médiane, également adjacente à l'ensemble électronique de mesure 30, est perpendiculaire aux pastilles 22 et 24 et présente deux arêtes opposées proches d'une arête respective de ces deux pastilles.

Il convient toutefois de remplir l'espace vide du perçage 20 d'un matériau dont la densité est semblable à celle du matériau de la sphère 7, de manière à noyer les pastilles 22 à 24 et l'ensemble électronique 30. Le matériau de remplissage doit donc pouvoir être moulé tout en étant isolant électrique. Si la sphère 7 est en aluminium, on peut avantageusement utiliser un mélange d'Araldite et de poudre d'alumine.

L'emploi d'une seule pastille telle que la pastille médiane 23 fournit également des résultats acceptables quoique moins précis.

Les capteurs 1 à 6 ainsi conçus délivrent des impulsions dont la fréquence est proportionnelle au débit de dose reçu. Dans le cas de capteurs à trois pastilles 22 à 24, on procède à une addition ou à une moyenne des résultats.

L'aluminium peut être préconisé comme matériau constitutif de la sphère 7 pour des mesures de rayonnement gamma, de même que le plomb ou le fer. Des composés hydrogénés sont à envisager pour le rayonnement neutronique.

**Revendications**

1. Détecteur d'orientation de sources émettrices de rayonnement radioactif parallèle comportant des capteurs enchâssés dans un matériau absorbant, caractérisé en ce que ce détecteur comprend une sphère (7) homogène d'un matériau absorbant le rayonnement en proportion variable suivant la longueur du trajet du rayonnement dans le matériau, six capteurs de rayonnement (1 à 6), situés par paires sur trois diamètres distincts (P, Q, Q') de la sphère et réagissant aux rayonnements reçus suivant des caractéristiques indépendantes de la direction de la source, ainsi qu'un système (10, 30) de mesure et de comparaison des rayonnements reçus par les capteurs.

2. Détecteur d'orientation de sources suivant la revendication 1, caractérisé en ce que les diamètres sont tous perpendiculaires entre eux.

3. Détecteur d'orientation de sources suivant l'une quelconque des revendications 1 ou 2, caractérisé en ce que les capteurs sont tous à une même distance du centre de la sphère.

4. Détecteur d'orientation de sources suivant l'une quelconque des revendications 1 à 3, caractérisé en ce que les capteurs comprennent une pastille semi-conductrice (22).

5. Détecteur d'orientation de sources suivant l'une quelconque des revendications 1 à 3, caractérisé en ce que les capteurs comprennent trois pastilles (22 à 24) semi-conductrices orientées perpendiculairement.

6. Détecteur d'orientation de sources suivant la revendication 4 ou 5, caractérisé en ce que les capteurs sont chacun inclus dans un évidement (20) rempli de matériau moulable de densité identique au matériau de la sphère.

7. Détecteur d'orientation de sources suivant la revendication 6, caractérisé en ce que la sphère est en aluminium et le matériau moulable est un mélange de colle et d'alumine.


**Patentansprüche**

1. Orientierungsdetektor von parallel radioaktive Strahlung emittierenden Quellen, welche eingepasste Meßfühler in einem absorbierenden Material enthalten,
   **dadurch g e k e n n z e i c h n e t,**
   daß dieser Detektor eine homogene Kugel (7) aus die Radioaktivität in veränderlichem Verhältnis entsprechend der Länge des Strahlungswegs im Material absorbierendem Material, sechs, paarweise auf drei verschiedenen Durchmessern (P, Q, Q') der Kugel liegenden und auf -die gemäß den von der Richtung der Quelle unabhängigen Eigenschaften erhaltenen Strahlungen reagierenden Strahlungs-Meßfühlern (1 bis 6), sowie ein System (10, 30) zum Messen und Vergleichen der durch die Meßfühler empfangenen Strahlung umfaßt.

2. Orientierungsdetektor von Quellen gemäß Anspruch 1, dadurch gekennzeichnet, daß die Durchmesser alle aufeinander senkrecht stehen.

3. Orientierungsdetektor von Quellen gemäß einem der Ansprüche 1 oder 2, dadurch gekennzeichnet, daß die Meßfühler alle im selben bestand zum Zentrum der Kugel sind.

4. Orientierungsdetektor von Quellen gemäß einem der Ansprüche 1 bis 3, dadurch gekennzeichnet, daß die Meßfühler eine halbleitende Anschlußfläche (22) umfassen.

5. Orientierungsdetektor von Quellen gemäß einem der Ansprüche 1 bis 3, dadurch gekennzeichnet, daß die Meßfühler drei senkrecht ausgerichtete halbleitende Anschlußflächen (22 bis 24) umfassen.

6. Orientierungsdetektor von Quellen gemäß den Ansprüchen 4 oder 5, dadurch gekennzeichnet, daß jeder der Meßfühler in einer mit formbarem Material, dergleichen Dichte wie die der Kugel, aufgefüllten Aussparung (20) eingeschlossen ist.

7. Orientierungsdetektor von Quellen gemäß Anspruch 6, dadurch gekennzeichnet, daß die Kugel aus Aluminium ist und das formbare Material eine Mischung aus Klebstoff und Aluminium ist.

**Claims**

1. Orientation detector for sources emitting parallel radioactive radiation having sensors inserted in an absorbent material, characterized in that said detector comprises a homogeneous sphere (7) of a material absorbing radiation in a variable proportion as a function of the length of the path of the radiation in the material, six radiation sensors (1 to 6) arranged in pairs on three different diameters (P, Q, Q') of the sphere and reacting to the radiations received in accordance with characteristics independent of the direction of the source, as well as a system (10, 30) for measuring and comparing the radiations received by the sensors.

2. Orientation detector according to claim 1, characterized in that the diameters are perpendicular to one another.

3. Source orientation detector according to either of the claims 1 or 2, characterized in that the sensors are all at the same distance from the centre of the sphere.

4. Source orientation detector according to any one of the claims 1 to 3, characterized in that the sensors comprise at least one semiconductor pellet (22).

5. Source orientation detector according to any one of the claims 1 to 3, characterized in that the sensors comprise three semiconductor pellets (22 to 24) oriented perpendicular to one another.

6. Source orientation detector according to either of the claims 4 or 5, characterized in that each of the sensors is included in a recess (20) filled with a mouldable material having a density identical to the material of the sphere.

7. Source orientation detector according to claim 6, characterized in that the sphere is of aluminium and the mouldable material is a mixture of glue and alumina.

FIG.1

FIG. 3

FIG. 2